(19) **Europäisches Patentamt / European Patent Office / Office européen des brevets**

(11) **EP 4 693 440 A1**

(12) **EUROPEAN PATENT APPLICATION**
published in accordance with Art. 153(4) EPC

(43) Date of publication:
**11.02.2026 Bulletin 2026/07**

(21) Application number: **24780509.6**

(22) Date of filing: **27.03.2024**

(51) International Patent Classification (IPC):
$H01M\ 4/131^{(2010.01)}$    $H01M\ 4/505^{(2010.01)}$
$H01M\ 4/525^{(2010.01)}$

(52) Cooperative Patent Classification (CPC):
**H01M 4/131; H01M 4/505; H01M 4/525;**
Y02E 60/10

(86) International application number:
**PCT/JP2024/012367**

(87) International publication number:
**WO 2024/204407 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023054199**

(71) Applicant: **Panasonic Intellectual Property Management Co., Ltd.**
**Kadoma-shi, Osaka 571-0057 (JP)**

(72) Inventors:
• **FUKUTOME, Daiki**
  **Kadoma-shi, Osaka 571-0057 (JP)**

• **KAWADA, Hiroshi**
  **Kadoma-shi, Osaka 571-0057 (JP)**
• **ATSUMI, Taruto**
  **Kadoma-shi, Osaka 571-0057 (JP)**
• **HAGAWA, Reiko**
  **Kadoma-shi, Osaka 571-0057 (JP)**
• **KUROSAWA, Takako**
  **Kadoma-shi, Osaka 571-0057 (JP)**
• **OKOSHI, Masaki**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NON-AQUEOUS ELECTROLYTE SECONDARY BATTERIES, AND NON-AQUEOUS ELECTROLYTE SECONDARY BATTERY**

(57)    Provided is a positive electrode active material for non-aqueous electrolyte secondary batteries which enables improvement in battery capacity. This positive electrode active material for non-aqueous electrolyte secondary batteries is characterized by having a lithium-containing composite oxide containing secondary particles formed by aggregation of primary particles, and is characterized in that: the lithium-containing composite oxide has, in cross-sectional observation of the secondary particles, 300 or more voids observed per visual field of 76.46 $\mu m^2$; and the median of nearest-void distances of the voids observed per visual field of 76.46 $\mu m^2$ is 170 nm or less.

Figure 3

# EP 4 693 440 A1

## Description

### TECHNICAL FIELD

The present disclosure relates to a positive electrode active material for non-aqueous electrolyte secondary batteries, and a non-aqueous electrolyte secondary battery in which the positive electrode active material is used.

### BACKGROUND

In recent years, a non-aqueous electrolyte secondary battery such as a lithium ion battery has been widely used in applications requiring a high capacity, such as in-vehicle applications and power storage applications. Since a positive electrode active material, which is a main component of a positive electrode, greatly affects performance such as the capacity, durability (capacity retention rate), and charge-discharge efficiency of the battery, many studies have been conducted on the positive electrode active material.

For example, Patent Document 1 discloses that for the purpose of improving the capacity retention rate of a battery, a lithium composite metal oxide having voids inside secondary particles and having 0.3 to 15 voids per 1 $\mu m^2$ of the cross section of the secondary particles is used as a positive electrode active material. In the invention disclosed in Patent Document 1, only voids having an area of greater than or equal to 0.01 $\mu m^2$ are counted, and a void ratio of greater than or equal to 1% and less than or equal to 50% is considered to be preferable.

### CITATION LIST

### PATENT LITERATURE

Patent Literature 1: JP 2016-169817 A

### SUMMARY

Incidentally, in a non-aqueous electrolyte secondary battery such as a lithium ion battery, there is still room for an increase in the capacity of the battery.

Therefore, an object of the present disclosure is to provide a positive electrode active material for non-aqueous electrolyte secondary batteries capable of increasing the capacity of a battery, and a non-aqueous electrolyte secondary battery including the positive electrode active material for non-aqueous electrolyte secondary batteries.

A positive electrode active material for non-aqueous electrolyte secondary batteries according to the present disclosure includes a lithium-containing composite oxide containing secondary particles formed by aggregation of primary particles, wherein the lithium-containing composite oxide has, in cross-sectional observation of the secondary particles, 300 or more voids observed per visual field of 76.46 $\mu m^2$, and a median of nearest inter-void distances of the voids observed per visual field of 76.46 $\mu m^2$ is less than or equal to 170 nm.

A non-aqueous electrolyte secondary battery according to the present disclosure includes a positive electrode containing the positive electrode active material for non-aqueous electrolyte secondary batteries, a negative electrode, and a non-aqueous electrolyte secondary battery.

According to the present disclosure, the capacity of the battery can be increased.

### BRIEF DESCRIPTION OF DRAWINGS

FIG. 1 is a cross-sectional view of a non-aqueous electrolyte secondary battery as an example of an embodiment.
FIG. 2 is a scanning electron microscope image of the cross section of secondary particles of a lithium-containing composite oxide as an example of an embodiment.
FIG. 3 shows a schematic view of the cross section of the secondary particles.

### DESCRIPTION OF EMBODIMENTS

Hereinafter, an example of an embodiment of a positive electrode active material for non-aqueous electrolyte secondary batteries according to the present disclosure and an example of an embodiment of a non-aqueous electrolyte secondary battery including the positive electrode active material will be described in detail with reference to the drawing. Note that it is within the scope of the present disclosure to selectively combine respective components of a plurality of embodiments and modifications described below.

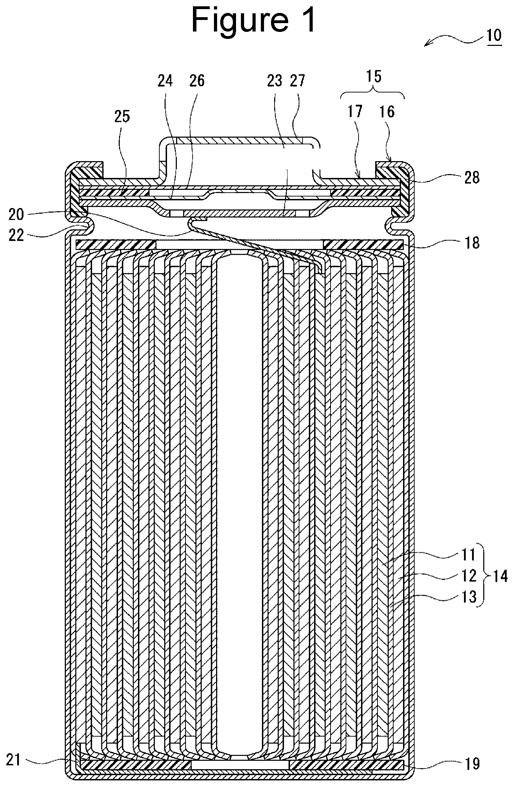

FIG. 1 is a cross-sectional view of a non-aqueous electrolyte secondary battery as an example of an embodiment. A non-aqueous electrolyte secondary battery 10 illustrated in FIG. 1 includes a wound-type electrode assembly 14 formed by winding a positive electrode 11 and a negative electrode 12 with a separator 13 interposed therebetween, a non-aqueous electrolyte, insulating plates 18 and 19 disposed on and under the electrode assembly 14, respectively, and a battery case 15 housing the above-described members therein. The battery case 15 includes a bottomed cylindrical case body 16 and a sealing assembly 17 that closes an opening of the case body 16. Note that, instead of the wound electrode assembly 14, an electrode assembly having another form, such as a stacked electrode assembly in which positive electrodes and negative electrodes are alternately stacked with separators interposed between the positive electrodes and the negative electrodes, may be applied. Examples of the battery case 15 include metal cases having a cylindrical shape, a square shape, a coin shape, a button shape, or the like, and resin cases (so-called laminated type) formed by lamination with a resin sheet.

The non-aqueous electrolyte has, for example, ion conductivity (for example, lithium ion conductivity). The non-aqueous electrolyte may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product in which at least a part of hydrogen in these solvents is substituted with a halogen atom such as fluorine (for example, fluoroethylene carbonate or the like). As the electrolyte salt, for example, a lithium salt such as $LiPF_6$ is used.

As the solid electrolyte, for example, a solid or gel polymer electrolyte, an inorganic solid electrolyte, or the like can be used. The polymer electrolyte contains, for example, a lithium salt and a matrix polymer or contains, for example, a non-aqueous solvent, a lithium salt, and a matrix polymer. As the matrix polymer, for example, a polymer material is used that absorbs a non-aqueous solvent and gelates. Examples of the polymer material include a fluororesin, an acrylic resin, and a polyether resin. Examples of the usable inorganic solid electrolyte include materials known for all-solid-state lithium ion secondary batteries and the like (for example, oxide-based solid electrolytes, sulfide-based solid electrolytes, and halogen-based solid electrolytes).

The case body 16 is, for example, a bottomed cylindrical metal container. A gasket 28 is provided between the case body 16 and the sealing assembly 17 to ensure airtightness within the battery. The case body 16 has a projecting portion 22 in which, for example, a part of a side surface portion of the case body 16 projects inward to support the sealing assembly 17. The projecting portion 22 is preferably formed in an annular shape along a circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are sequentially stacked from the electrode assembly 14. Each member constituting the sealing assembly 17 has, for example, a disk shape or a ring shape, and the members excluding the insulating member 25 are electrically connected to each other. The lower vent member 24 and the upper vent member 26 are connected to each other at the respective central portions, and the insulating member 25 is interposed between the respective peripheral portions. When the internal pressure of the non-aqueous electrolyte secondary battery 10 increases due to heat generation caused by an internal short circuit or the like, for example, the lower vent member 24 is deformed to push up the upper vent member 26 toward the cap 27 side and is broken, and a current path between the lower vent member 24 and the upper vent member 26 is cut off. When the internal pressure further increases, the upper vent member 26 breaks, and gas is discharged from an opening of the cap 27.

In the non-aqueous electrolyte secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to a bottom inner surface of the case body 16 by welding or the like, and the case body 16 becomes a negative electrode terminal.

Hereinafter, the positive electrode 11, the negative electrode 12, and the separator 13 will be described in detail.

[Positive Electrode]

The positive electrode 11 includes a positive electrode core and a positive electrode mixture layer formed on the positive electrode core. As the positive electrode core, a foil of a metal, such as aluminum or an aluminum alloy, which is stable in a potential range of the positive electrode 11, a film in which the metal is disposed on a surface layer, or the like can be used. The positive electrode mixture layer includes a positive electrode active material, a binder, and a conductive agent, and is preferably provided on both surfaces of the positive electrode core. The positive electrode active material includes a lithium-containing composite oxide containing secondary particles in which primary particles are aggregated. The positive electrode 11 can be prepared, for example, by applying a positive electrode mixture slurry onto a positive electrode core, drying the applied film, and then compressing the applied film to form a positive electrode mixture layer on both surfaces of the positive electrode core.

Examples of the binder that is contained in the positive electrode mixture layer include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof (PAA-Na, PAA-K, or the like and a partially neutralized salt may be used), and polyvinyl alcohol (PVA). Among them, one type may be used alone, or two or more types may be used in combination. The content of the binder is, for example, greater than or equal to 0.5% by mass and less than or equal to 5% by mass with respect to the mass of the positive electrode mixture layer.

Examples of the conductive agent contained in the positive electrode mixture layer include carbon materials such as carbon black (CB), acetylene black (AB), Ketjenblack, carbon nanotubes (CNTs), and graphite. Among them, one type may be used alone, or two or more types may be used in combination. The content of the conductive agent is, for example, greater than or equal to 0.1% by mass and less than or equal to 10% by mass with respect to the mass of the positive electrode mixture layer.

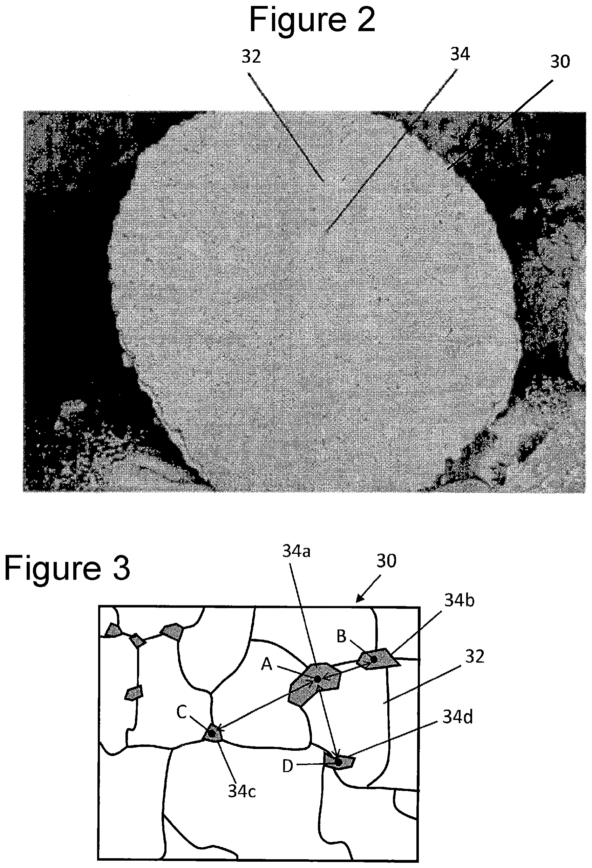

FIG. 2 is a scanning electron microscope (SEM) image of the cross section of secondary particles of a lithium-containing composite oxide as an example of an embodiment. As shown in FIG. 2, a secondary particle 30 of the lithium-containing composite oxide is formed by the aggregation of a large number of primary particles 32, and has a plurality of voids 34 formed between the primary particles 32. The lithium-containing composite oxide has, in the cross-sectional observation of the secondary particles, 300 or more voids observed per visual field of 76.46 $\mu m^2$, and the median of the nearest inter-void distances of the voids observed per visual field of 76.46 $\mu m^2$ is less than or equal to 170 nm. When the voids formed in the secondary particles of the lithium-containing composite oxide have the characteristics as described above, the capacity of the battery can be improved.

Hereinafter, a method for observing the cross section of the secondary particles for measuring the number of the voids, the nearest inter-void distances of the voids, and the like will be described.

(1) The cross section of the secondary particles is exposed. For example, the lithium-containing composite oxide is processed by a focused ion beam (FIB) processing device to expose a cross section. Alternatively, the positive electrode containing the lithium-containing composite oxide may be cut out and processed by an ion milling apparatus to obtain the cross section of the lithium-containing composite oxide contained in the positive electrode mixture layer. A sample to be subjected to cross-sectional processing may be not only a powder or an electrode of the lithium-containing composite oxide but also a material obtained by solidifying a powder of the lithium-containing composite oxide with a resin or the like.

(2) Using a scanning electron microscope, the reflected electron image of the cross section of the exposed secondary particles is captured, and the cross-sectional image of the secondary particles is acquired. A magnification when the reflected electron image is captured is, for example, 20,000 times.

(3) The cross-sectional image of the secondary particles acquired by the above-described process is read into a computer, and binarized using an image analysis software to acquire a binarized image acquired by converting the cross section of the particles in the cross-sectional image into white color and voids existing in the cross section of the particles into black color. Image J, Avizo-Materials Science, and the like can be appropriately selected as the image analysis software. Note that it is preferable that the cross section of the particles and the voids in the cross-sectional image are extracted by subjecting the cross-sectional image to noise removal such as a non-local means filter or BM3D, detecting an edge, and overlapping and applying a threshold of brightness with a Marker Based-Watershed method.

(4) For the binarized image, the number of the voids observed per visual field in the cross section of the secondary particles and the centroidal position of each void observed per visual field in the cross section of the secondary particles are calculated using the image analysis software. The cross section of the secondary particles refers to the entire cross section of the secondary particles, and includes both black and white portions. The centroidal position of the void is defined as a position which is the center of the mass of pixels included in a region surrounded by the outer periphery of the void on the premise that the pixels constituting the image have the same mass. For the binarized image, the area of each void existing in the cross section of the secondary particles is calculated using the image analysis software. The visual field of the cross section of the secondary particles in the case of calculating the number of the voids existing in the cross section of the secondary particles, the centroidal position of each void, and the area of each void is desirably, for example, 76.46 $\mu m^2$.

In the lithium-containing composite oxide, from the viewpoint of increasing the capacity of the battery, the number of the voids observed per visual field of 76.46 $\mu m^2$ of the cross section of the secondary particles is greater than or equal to 300, preferably greater than or equal to 400, and more preferably greater than or equal to 500. The upper limit of the number of the voids is not particularly limited, and is, for example, 1200.

The nearest inter-void distances of the voids will be described using the schematic diagram of the cross section of the secondary particles shown in FIG. 3. In the cross section of the secondary particle 30, the shortest distance among distances from a centroidal position A of a void 34a formed between the primary particles 32 to centroidal positions (B, C, D) of another neighbor voids (for example, 34b, 34c, 34d) is defined as the nearest-void distance of the void A. In FIG. 3, the nearest-void distance of the void A is a distance from the centroidal position A of the void 34a to the centroidal position B of the void 34b. In the present embodiment, the nearest inter-void distances for all the voids observed per visual field of 76.46 $\mu m^2$ in the cross section of the secondary particles are calculated from the centroidal position of each void calculated in the cross-sectional observation of the secondary particles described above, and the central value (median) of the calculated nearest inter-void distances is calculated. In the present embodiment, the calculated median is defined as the median of the nearest inter-void distances of the voids observed per visual field of 76.46 $\mu m^2$ in the cross section of the secondary particles.

In the lithium-containing composite oxide, from the viewpoint of increasing the capacity of the battery, the nearest inter-void distances of the voids observed per visual field of 76.46 $\mu m^2$ in the cross section of the secondary particles are less than or equal to 170 nm, preferably less than or equal to 160 nm, and more preferably less than or equal to 150 nm. The lower limit of the nearest inter-void distances is not particularly limited, and is, for example, 80 nm.

In the lithium-containing composite oxide, for example, from the viewpoint that the capacity of the battery can be further increased, the average value of the areas of the voids obtained by the cross-section observation of the secondary particles is preferably less than or equal to 3000 $nm^2$, and more preferably less than or equal to 1500 $nm^2$. The upper limit of the average value of the areas of the voids is, for example, greater than or equal to 200 $nm^2$.

In the lithium-containing composite oxide, for example, from the viewpoint that the capacity of the battery can be further increased, the void ratio determined by the cross-sectional observation of the secondary particles is preferably less than or equal to 2.0%, and preferably less than or equal to 1.5%. The void ratio is the ratio of the total area of the voids to the cross section of the secondary particles, and is calculated by the formula of (total area of voids/cross-sectional area of secondary particles) $\times$ 100. For example, when the visual field for observing the cross section of the secondary particles is 76.46 $\mu m^2$, the void ratio is calculated from the total area of the voids observed per 76.46 $\mu m^2$ of the cross-sectional area of the secondary particles.

A volume-based median diameter (D50) in the secondary particles of the lithium-containing composite oxide is, for example, greater than or equal to 3 $\mu m$ and less than or equal to 30 $\mu m$, and preferably greater than or equal to 5 $\mu m$ and less than or equal to 25 $\mu m$. D50 means a particle diameter in which a cumulative frequency in a volume-based particle size distribution is 50% from the smallest particle size, and is also referred to as a median diameter. The particle size distribution of the composite oxide can be measured by a laser diffraction type particle size distribution measuring apparatus (for example, MT3000II manufactured by MicrotracBEL Corp.) using water as a dispersion medium. The lithium-containing composite oxide has, for example, a layered crystal structure. Specific examples thereof include a layered structure belonging to space group R-3m and a layered structure belonging to space group C2/m.

The lithium-containing composite oxide preferably contains at least one element M selected from the group consisting of Al, Ba, Bi, Ca, Ce, Er, Eu, Hf, Mg, Nb, La, Sb, Sr, Ta, Ti, V, and Zr, for example, from the viewpoint of suppressing a decrease in a capacity retention rate in a charge-discharge cycle. The content of the element M is, for example, preferably greater than or equal to 0.01 mol% and less than or equal to 5 mol% with respect to the total molar amount of elements excluding Li and O constituting the lithium-containing composite oxide.

The lithium-containing composite oxide preferably contains at least one element selected from the group consisting of Ni, Co, and Mn, for example, from the viewpoint of suppressing a decrease in a capacity retention rate in a charge-discharge cycle.

The lithium-containing composite oxide preferably contains greater than or equal to 50 mol% of Ni, and more preferably contains greater than or equal to 60 mol% and less than or equal to 90 mol% of Ni with respect to the total number of moles of elements other than Li and O, for example, from the viewpoint of increasing the capacity of the battery, suppressing a decrease in a capacity retention rate in a charge-discharge cycle, and the like.

A specific suitable example of the lithium-containing composite oxide is a composite oxide represented by the general formula $Li_aNi_bMn_cCo_dM_fO_2$, wherein $1.05 \leq a \leq 1.15$, $0.50 \leq b \leq 0.95$, $0 \leq c \leq 0.50$, $0 \leq d \leq 0.1$, $0 \leq f \leq 0.05$, $b + c + d + f = 1$, and M is at least one selected from the elements Ms, for example.

The positive electrode mixture layer may contain a lithium-containing composite oxide in which the number of voids in the cross section of the secondary particles and the median of the nearest inter-void distances of the voids do not satisfy the above ranges. The content of the lithium-containing composite oxide in which the number of the voids in the cross section of the secondary particles and the median of the nearest inter-void distances of the voids satisfy the above ranges is, for example, preferably greater than or equal to 50% by mass, more preferably greater than or equal to 80% by mass, and may be substantially 100% by mass, with respect to the total mass of the positive electrode active material.

Hereinafter, an example of a method for producing the lithium-containing composite oxide according to the present disclosure will be described.

The producing step of the lithium-containing composite oxide includes, for example: a first step of obtaining a composite hydroxide or a composite oxide containing a metal element such as Ni, Co, or Mn; a second step of mixing and firing the composite hydroxide or the composite oxide and a lithium compound; and a third step of washing the fired product with water and drying the product. In the first step, pre-firing may be performed at a temperature lower than that for the main firing in the second step. As a result of studies by the present inventors, it has been found that conditions such as, for example, the temperature of firing during the producing step, and the water washing affect the number of the voids in the cross section of the secondary particles of the lithium-containing composite oxide and the lengths of the nearest inter-void distances of the voids.

In the first step, for example, an alkali solution such as sodium hydroxide is added dropwise while a solution of metal salts containing at least one metal element selected from the group consisting of Ni, Co, and Mn, and the above element M is stirred so as to adjust the pH to the alkali side (for example, greater than or equal to 8.5 and less than or equal to 12.5), thereby precipitating (coprecipitating) the composite hydroxide. The composite hydroxide is pre-fired in the atmosphere or under an oxygen stream to obtain the composite oxide. The pre-firing temperature is preferably lower than or equal to 600°C, and may be higher than or equal to 300°C and lower than or equal to 500°C.

The pre-firing may be, for example, a multi-stage firing step including at least a first firing step of firing at 100 to 300°C in the atmosphere and a second firing step of firing the fired product obtained in the first firing step at 300 to 600°C in the atmosphere. In the first firing step, the temperature is raised to a first set temperature of lower than or equal to 300°C at a first temperature raising rate of 0.2 to 5.5°C/min. In the second firing step, the temperature is raised to a second set temperature of lower than or equal to 600°C at a second temperature raising rate of 0.1 to 3.5°C/min slower than the first temperature raising rate. A plurality of the first and second temperature raising rates may be set in each predetermined temperature region within the above range.

A holding time at the first set temperature in the first firing step is preferably less than or equal to 5 hours, and more preferably less than or equal to 3 hours. The holding time at the first set temperature is a time of keeping the first set temperature after the temperature reaches the first set temperature (the same applies to the second firing step), and the holding time may be zero. A holding time at the second set temperature in the second firing step is preferably greater than or equal to 1 and less than or equal to 10 hours, and more preferably greater than or equal to 1 and less than or equal to 5 hours. Although varying depending on the main firing temperature and the like, a lower pre-firing temperature tends to yield a smaller median of the nearest inter-void distances of the voids.

In the second step, for example, the composite hydroxide or composite oxide obtained in the first step is mixed with the lithium compound. Examples of the lithium compound include $Li_2CO_3$, $LiOH$, $Li_2O_2$, $Li_2O$, $LiNO_3$, $LiNO_3$, $Li_2SO_4$, $LiOH \cdot H_2O$, $LiH$, and $LiF$. The composite hydroxide or the composite oxide and the lithium compound are mixed at a molar ratio of the metal element Me and Li of, for example, greater than or equal to 1:0.95 and less than or equal to 1:1.15, and preferably greater than or equal to 1:1.05 and less than or equal to 1:1.15.

The step of firing the mixture in the third step is, for example, a multi-stage firing step including a first firing step of firing the mixture at 500°C to 700°C under an oxygen stream, and a second firing step of firing the fired product obtained in the first firing step at a temperature exceeding 700°C under an oxygen stream. In the first firing step, for example, the temperature is raised to a first set temperature of lower than or equal to 700°C at a first temperature raising rate of 0.2 to 5.5°C/min. In the second firing step, for example, the temperature is raised to a second set temperature of lower than or equal to 1000°C at a second temperature raising rate of 0.1 to 3.5°C/min slower than the first temperature raising rate. A plurality of the first and second temperature raising rates may be set in each predetermined temperature region within the above range.

A holding time at the first set temperature in the first firing step is preferably less than or equal to 5 hours, and more preferably less than or equal to 3 hours. The holding time at the first set temperature is a time of keeping the first set temperature after the temperature reaches the first set temperature (the same applies to the second firing step), and the holding time may be zero. A holding time at the second set temperature in the second firing step is preferably greater than or equal to 1 and less than or equal to 10 hours, and more preferably greater than or equal to 1 and less than or equal to 5 hours. The mixture is fired, for example, in an oxygen stream having an oxygen concentration of greater than or equal to 60%, and the flow rate of the oxygen stream is set to 0.2 to 4 mL/min per $10 cm^3$ of a firing furnace and greater than or equal to 0.3 L/min per 1 kg of the mixture.

In the fourth step, the fired product obtained in the third step is washed with water to remove impurities such as excessive Li, and the fired product washed with water is dried. If necessary, the fired product is pulverized, classified, and treated otherwise to adjust the D50 of the positive electrode active material to a desired range. The fired product washed with water may be vacuum-dried or dried in the atmosphere. An example of the drying temperature is higher than or equal to 150°C and lower than or equal to 250°C, and an example of a drying treatment time is greater than or equal to 1 hour and less than or equal to 5 hours. The water washing may be a method in which the active material is put into water and stirred, or a method in which the active material is made to pass through water to be moistened. The electrical conductivity of water used for the water washing is preferably less than or equal to $1 \times 10^{-4}$ S/m at 25°C. The degree of the water washing can be adjusted by a solid-liquid ratio between the fired product and water, a water washing time, a stirring speed, and the like. For example, the solid-liquid ratio between the fired product and water is preferably greater than or equal to 1:0.1 and less than or equal to 1:10, and more preferably greater than or equal to 1:0.5 and less than or equal to 1:5. Although varying depending on the main firing temperature, the water washing condition, and the like, performing the water washing tends to reduce the median of the nearest inter-void distances of the voids of the lithium-containing composite oxide.

In the producing step of the lithium-containing composite oxide, the addition of the element M, the pre-firing condition, the main firing condition, the water washing condition, and the like are appropriately changed so that the number of the voids in the cross section of the secondary particles of the composite oxide, the median of the nearest inter-void distances of the voids, and the like satisfy the above prescribed ranges.

[Negative Electrode]

The negative electrode 12 includes a negative electrode core and a negative electrode mixture layer formed on the negative electrode core. For the negative electrode core, a foil of a metal, such as copper or a copper alloy, which is stable in a potential range of the negative electrode 12, a film in which the metal is disposed on a surface layer thereof, or the like can be used. The negative electrode mixture layer contains a negative electrode active material, a binder, and a conductive agent such as carbon nanotube as necessary, and is preferably provided on both surfaces of the negative electrode core. The binder may be the same as that of the positive electrode 11. The negative electrode 12 can be prepared by, for example, applying a negative electrode mixture slurry containing a negative electrode active material and a binder and the like to the surface of a negative electrode core, drying the applied film, and then compressing the film to form a negative electrode mixture layer on each of both surfaces of the negative electrode core.

The negative electrode mixture layer generally contains a carbon material that reversibly occludes and releases lithium ions as a negative electrode active material. A suitable example of the carbon material is a graphite such as: a natural graphite such as scale-like graphite, massive graphite, or earthy graphite); and an artificial graphite such as massive artificial graphite (MAG) or graphitized mesophase carbon microbead (MCMB). As the negative electrode active material, an active material containing at least one of an element that forms an alloy with Li, such as Si and Sn, and a material containing such an element may be used. A suitable example of the active material is a Si-containing material in which Si fine particles are dispersed in a $SiO_2$ phase or a silicate phase such as lithium silicate. As the negative electrode active material, the carbon material, the Si-containing material, and the like may be used in combination.

[Separator]

As the separator 13, for example, a porous sheet having ion permeability and insulating properties is used. Specific examples of the porous sheet include a microporous thin film, a woven fabric, and a nonwoven fabric. As a material of the separator 13, polyolefin such as polyethylene and polypropylene, and cellulose are suitable. The separator 13 may have a single-layer structure or a multilayer structure. Further, a resin layer having high heat resistance, such as an aramid resin, may be formed on a surface of the separator 13.

A filler layer containing an inorganic filler may be formed at an interface between the separator 13 and at least one of the positive electrode 11 and the negative electrode 12. Examples of the inorganic filler include oxides containing metal elements such as Ti, Al, Si, and Mg, and phosphoric acid compounds. The filler layer can be formed by applying a slurry containing the filler to a surface of the positive electrode 11, the negative electrode 12, or the separator 13.

EXAMPLES

Hereinafter, the present disclosure will be further described with reference to Examples. However, the present disclosure is not limited to these Examples.

<Example 1>

[Synthesis of Positive Electrode Active Material]

A composite hydroxide represented by $[Ni_{0.8}Mn_{0.2}](OH)_2$ obtained by a coprecipitation method was heated from room temperature to 150°C at a temperature raising rate of 5.0°C/min in the atmosphere for pre-firing, and then heated to 400°C at a temperature raising rate of 1.0°C/min for pre-firing to obtain a Ni, Mn-containing composite oxide. The Ni, Mn-containing composite oxide, lithium hydroxide, tungsten oxide, and antimony oxide were mixed so that the molar ratio of the total amount of Ni and Mn, Li, W, and Sb was 1:1.11:0.003:0.003. The mixture was heated from room temperature to 650°C at a temperature raising rate of 2.0°C/min under an oxygen stream having an oxygen concentration of 95% (flow rate of 2.5 mL/min per 10 cm$^3$ and 5 L/min per 1 kg of the mixture) for firing, and then heated to 820°C at a temperature raising rate of 1.0°C/min for firing. This fired product was put into water having an electrical conductivity of less than or equal to $1 \times 10^{-5}$ S/m under a condition of the solid-liquid ratio of the fired product to water of 1:0.8, washed with water for 5 minutes while being stirred at 400 rpm, and then vacuum-dried at 180°C for 2 hours to obtain a positive electrode active material (lithium-containing composite oxide).

The cross section of the secondary particles of the positive electrode active material was exposed by the above-described method, and the cross section of the secondary particles was observed using an SEM (20,000 times). As a result, it was confirmed that the positive electrode active material is secondary particles each formed by the aggregation of a large number of primary particles, and the secondary particles contain a large number of voids. The number of voids observed per visual field of 76.46 $\mu$m$^2$ in the cross section of the secondary particles, the median of the nearest-void distances of the voids, the average value of the areas of the voids, and the void ratio were obtained from the SEM image of the cross section of the particles by the above-described image analysis method, and summarized in Table 1 (the same applies to the following Examples and Comparative Examples).

[Preparation of Positive Electrode]

The positive electrode active material, acetylene black, and polyvinylidene fluoride were mixed at a solid content mass ratio of 92:5:3, and N-methyl-2-pyrrolidone (NMP) was used as a dispersion medium to prepare a positive electrode mixture slurry. Next, the positive electrode mixture slurry was applied onto a positive electrode core formed of an aluminum foil, the applied film was dried and compressed, and then the positive electrode core was cut into a predetermined electrode size to obtain a positive electrode in which a positive electrode mixture layer was formed on each of both surfaces of the positive electrode core.

[Preparation of Negative Electrode]

As a negative electrode active material, graphite was used. The negative electrode active material, a sodium salt of CMC, and a dispersion of SBR were mixed at a solid content mass ratio of 98:1:1, and water was used as a dispersion medium to prepare a negative electrode mixture slurry. Next, the negative electrode mixture slurry was applied onto a negative electrode core made of a copper foil, the applied film was dried and rolled, and then the negative electrode core was cut into a predetermined electrode size to obtain a negative electrode in which a negative electrode mixture layer was formed on each of both surfaces of the negative electrode core.

[Preparation of Non-Aqueous Electrolyte]

Ethylene carbonate (EC), dimethyl carbonate (DMC), and ethyl methyl carbonate (EMC) were mixed at a volume ratio of 20:75:5. LiPF$_6$ was dissolved in the mixed solvent so as to attain a concentration of 1.3 mol/L to prepare a non-aqueous electrolyte.

[Preparation of Test Cell]

The positive electrode and the negative electrode to which leads were attached were wound with a separator interposed therebetween to prepare a wound electrode assembly. The electrode assembly was inserted into an exterior made of an aluminum laminate film, vacuum-dried at 105°C for 2 hours, then a non-aqueous electrolyte solution was injected into the exterior, and an opening of the exterior was sealed to obtain a test cell (non-aqueous electrolyte secondary battery).

<Example 2>

A test cell was prepared in the same manner as in Example 1 except that in the synthesis of a positive electrode active material, a Ni, Mn-containing composite oxide, lithium hydroxide, tungsten oxide, niobium oxide, and antimony oxide were mixed so that the molar ratio of the total amount of Ni and Mn, Li, W, Nb, and Sb was 1:1.11:0.003:0.003:0.0025.

<Example 3>

A test cell was prepared in the same manner as in Example 1 except that in the synthesis of a positive electrode active material, a Ni, Mn-containing composite oxide, lithium hydroxide, tungsten oxide, and niobium oxide were mixed so that the molar ratio of the total amount of Ni and Mn, Li, W, and Nb was 1:1.11:0.005:0.0025, and an upper limit temperature during firing was 800°C.

<Example 4>

A test cell was prepared in the same manner as in Example 1 except that in the synthesis of a positive electrode active material, a Ni, Mn-containing composite oxide, lithium hydroxide, tungsten oxide, niobium oxide, and calcium hydroxide were mixed so that the molar ratio of the total amount of Ni and Mn, Li, W, Nb, and Ca was 1:1.11:0.003:0.003:0.0075.

<Example 5>

A test cell was prepared in the same manner as in Example 1 except that in the synthesis of a positive electrode active material, a Ni, Mn-containing composite oxide, lithium hydroxide, tungsten oxide, niobium oxide, calcium hydroxide, and strontium hydroxide were mixed so that the molar ratio of the total amount of Ni and Mn, Li, W, Nb, Ca, and Sr was 1:1.11:0.003:0.003:0.0015: 0.0015.

<Example 6>

A test cell was prepared in the same manner as in Example 1 except that in the synthesis of a positive electrode active material, a Ni, Mn-containing composite oxide, lithium hydroxide, tungsten oxide, niobium oxide, aluminum hydroxide, and calcium hydroxide were mixed so that the molar ratio of the total amount of Ni and Mn, Li, W, Nb, Al, and Ca was 1:1.05:0.003:0.0025:0.005:0.0075, and an upper limit temperature during firing was 810°C.

<Example 7>

A test cell was prepared in the same manner as in Example 1 except that in the synthesis of a positive electrode active material, a Ni, Mn-containing composite oxide, lithium hydroxide, tungsten oxide, niobium oxide, and erbium nitrate were mixed so that the molar ratio of the total amount of Ni and Mn, Li, W, Nb, and Er was 1:1.11:0.003:0.003:0.0005.

<Example 8>

A test cell was prepared in the same manner as in Example 1 except that in the synthesis of a positive electrode active material, a Ni, Mn-containing composite oxide, lithium hydroxide, tungsten oxide, niobium oxide, and titanium oxide were mixed so that the molar ratio of the total amount of Ni and Mn, Li, W, Nb, and Ti was 1:1.11:0.003:0.003:0.003, and an upper limit temperature during firing was 830°C.

<Example 9>

A test cell was prepared in the same manner as in Example 1 except that in the synthesis of a positive electrode active material, a Ni, Mn-containing composite oxide, lithium hydroxide, tungsten oxide, niobium oxide, antimony oxide, and bismuth oxide were mixed so that the molar ratio of the total amount of Ni and Mn, Li, W, Nb, Sb, and Bi was 1:1.09:0.003:0.003:0.0025:0.0001, and an upper limit temperature during firing was 840°C.

<Example 10>

A test cell was prepared in the same manner as in Example 1 except that in the synthesis of a positive electrode active material, a Ni, Mn-containing composite oxide, lithium hydroxide, tungsten oxide, niobium oxide, calcium hydroxide, and zirconium oxide were mixed so that the molar ratio of the total amount of Ni and Mn, Li, W, Nb, Ca, and Zr was 1:1.11:0.003:0.003:0.002:0.001, and an upper limit temperature during firing was 830°C.

<Comparative Example 1>

A test cell was prepared in the same manner as in Example 1 except that in the synthesis of a positive electrode active material, a Ni, Mn-containing composite oxide, lithium hydroxide, tungsten oxide, niobium oxide, and antimony oxide were mixed so that the molar ratio of the total amount of Ni and Mn, Li, W, Nb, and Sb was 1:1.11:0.003:0.003:0.001.

<Comparative Example 2>

A test cell was prepared in the same manner as in Example 1 except that in the synthesis of a positive electrode active material, a Ni, Mn-containing composite oxide, lithium hydroxide, tungsten oxide, iron oxide, and antimony oxide were mixed so that the molar ratio of the total amount of Ni and Mn, Li, W, Fe, and Sb was 1:1.11:0.0025:0.02:0.0025, and an upper limit temperature during firing was 800°C.

<Comparative Example 3>

A test cell was prepared in the same manner as in Example 1 except that in the synthesis of a positive electrode active material, a Ni, Mn-containing composite oxide, lithium hydroxide, tungsten oxide, niobium oxide, aluminum hydroxide, and calcium hydroxide were mixed so that the molar ratio of the total amount of Ni and Mn, Li, W, Nb, Al, and Ca was 1:1.15:0.001:0.001:0.01:0.01, and an upper limit temperature during firing was 790°C.

<Comparative Example 4>

A test cell was prepared in the same manner as in Example 1 except that in the synthesis of a positive electrode active material, a Ni, Mn-containing composite oxide, lithium hydroxide, tungsten oxide, niobium oxide, and aluminum hydroxide were mixed so that the molar ratio of the total amount of Ni and Mn, Li, W, Nb, and Al was 1:1.09:0.001:0.003:0.01, and an upper limit temperature during firing was 810°C.

<Comparative Example 5>

A test cell was prepared in the same manner as in Example 1 except that in the synthesis of a positive electrode active material, a Ni, Mn-containing composite oxide, lithium hydroxide, niobium oxide, and strontium hydroxide were mixed so that the molar ratio of the total amount of Ni and Mn, Li, Nb, and Sr was 1:1.11:0.0025:0.0025, and an upper limit temperature during firing was 800°C.

[Charge-Discharge Test]

Each test cell to be evaluated as subjected to constant current charge at a current of 0.2 C under a temperature environment of 25°C until the cell voltage reached 4.5 V, and then to constant voltage charge at a voltage of 4.5 V until the current reached 0.02 C. After each test cell was rested for 10 minutes, each test cell was subjected to constant current discharge at a current of 0.2 C under a temperature environment of 25°C until the voltage reached 2.5 V. The discharge capacity at this time was defined as a battery capacity. The results are summarized in Table 1.
Each test cell was subjected to 25 cycles of the charge-discharge, and the capacity retention rate was determined by the following formula. The results are summarized in Table 1.

Capacity retention rate (%) = (discharge capacity at 3rd cycle/discharge capacity at 25th cycle) $\times$ 100

[Table 1]

| | | Positive electrode active material | | | | Evaluation | |
|---|---|---|---|---|---|---|---|
| | Additive element (mol%) | Number of voids | Median of nearest inter-void distances of voids (nm) | Average value of areas of voids (nm$^2$) | Void ratio (%) | Battery capacity (mAh/g) | Capacity retention rate (%) |
| Example 1 | W(0.3), Sb(0.3) | 330 | 115.5 | 396 | 0.17 | 222.6 | 95.8 |
| Example 2 | W(0.3), Nb(0.3), Sb(0.25) | 783 | 119.1 | 671 | 0.69 | 214.0 | 97.5 |
| Example 3 | W(0.5), Nb(0.25) | 916 | 132.8 | 822 | 0.99 | 215.4 | 95.1 |

(continued)

| | Positive electrode active material | | | | | Evaluation | |
|---|---|---|---|---|---|---|---|
| | Additive element (mol%) | Number of voids | Median of nearest inter-void distances of voids (nm) | Average value of areas of voids (nm$^2$) | Void ratio (%) | Battery capacity (mAh/g) | Capacity retention rate (%) |
| Example 4 | W(0.3), Nb(9.3), Ca(0.75) | 617 | 134.2 | 754 | 0.61 | 220.5 | 97.2 |
| Example 5 | W(0.3), Nb(0.3), Ca(0.15), Sr(0.15) | 609 | 168.2 | 2026 | 1.61 | 213.8 | 97.1 |
| Example 6 | W(0.5), Nb(0.25), Al(0.5), Ca(0.75) | 1038 | 128.9 | 1093 | 1.48 | 214.6 | 97.1 |
| Example 7 | W(0.3), Nb(0.3), Er(0.05) | 517 | 147.6 | 1025 | 0.69 | 214.2 | 96.4 |
| Example 8 | W(0.3), Nb(0.3), Ti(0.3) | 715 | 158.6 | 977 | 0.91 | 216.7 | 96.0 |
| Example 9 | W(0.3), Nb(0.3), Sb(0.25), Bi(0.01) | 545 | 152.7 | 537 | 0.38 | 218.2 | 95.6 |
| Example 10 | W(0.3), Nb(0.3), Ca(0.2), Zr(0.1) | 566 | 165.7 | 1300 | 0.96 | 215.3 | 97.1 |
| Comparative Example 1 | W(0.3), Nb(0.3), Sb(0.1) | 371 | 178.9 | 815 | 1.48 | 209.5 | 97.7 |
| Comparative Example 2 | W(0.25), Fe(2), Sb(0.25) | 368 | 196.8 | 2378 | 0.40 | 204.0 | 97.6 |
| Comparative Example 3 | W(0.1), Nb(0.1), Al(1.0), Ca(1.0) | 314 | 235.0 | 4528 | 1.14 | 204.9 | 94.0 |
| Comparative Example 4 | W(0.1), Nb(0.3), Al(1.0) | 587 | 173.8 | 1933 | 1.86 | 213.2 | 90.2 |
| Comparative Example 5 | Nb(0.25), Sr(0.25) | 123 | 387.6 | 17963 | 2.89 | 193.4 | 79.5 |

As shown in Table 1, all of the test cells of Examples had improved battery capacity as compared with the test cells of Comparative Examples. From this result, the battery capacity can be improved by using, as the positive electrode active material, a lithium-containing composite oxide in which the number of voids observed per visual field of 76.46 $\mu$m$^2$ is greater than or equal to 300 in the cross section of the secondary particles, and the median of the nearest inter-void distances of the voids observed per visual field of 76.46 $\mu$m$^2$ is less than or equal to 170 nm. In the test cells of Examples, a lithium composite oxide containing a specific element was used, and all of them showed a capacity retention rate of greater than or equal to 95%. Meanwhile, the test cells of Comparative Examples also used a lithium composite oxide containing a specific element, but there were Comparative Examples in which the capacity retention rate was less than 95%. From this, it can be said that, as in Examples, in the cross section of the secondary particles, the number of voids observed per visual field of 76.46 $\mu m^2$ is greater than or equal to 300, the median of the nearest inter-void distances of the voids observed per visual field of 76.46 $\mu m^2$ is less than or equal to 170 nm, and the lithium-containing composite oxide containing a specific element is used, so that both two effects of improving the battery capacity and suppressing the decrease in the capacity retention rate in the charge-discharge cycle can be achieved.

[Supplementary Notes]

Configuration 1:

A positive electrode active material for non-aqueous electrolyte secondary batteries including a lithium-containing composite oxide containing secondary particles formed by aggregation of primary particles, wherein
the lithium-containing composite oxide has, in cross-sectional observation of the secondary particles, 300 or more voids observed per visual field of 76.46 $\mu m^2$, and a median of nearest inter-void distances of the voids observed per visual field of 76.46 $\mu m^2$ is less than or equal to 170 nm.

Configuration 2:

The positive electrode active material for non-aqueous electrolyte secondary batteries according to Configuration 1, wherein, in the lithium-containing composite oxide, an average value of areas of the voids obtained by the cross-section observation of the secondary particles is less than or equal to 3000 $nm^2$.

Configuration 3:

The positive electrode active material for non-aqueous electrolyte secondary batteries according to Configuration 1 or 2, wherein, in the lithium-containing composite oxide, a void ratio obtained by the cross-section observation of the secondary particles is less than or equal to 2.0%.

Configuration 4:

The positive electrode active material for non-aqueous electrolyte secondary batteries according to any one of Configurations 1 to 3, wherein the lithium-containing composite oxide contains at least one element selected from the group consisting of Al, Ba, Bi, Ca, Ce, Er, Eu, Hf, Mg, Nb, La, Sb, Sr, Ta, Ti, V, and Zr.

Configuration 5:

The positive electrode active material for non-aqueous electrolyte secondary batteries according to any one of Configurations 1 to 4, wherein the lithium-containing composite oxide contains at least one element selected from the group consisting of Ni, Co, and Mn.

Configuration 6:

A non-aqueous electrolyte secondary battery including a positive electrode containing the positive electrode active material for non-aqueous electrolyte secondary batteries according to any one of configurations 1 to 5, a negative electrode, and a non-aqueous electrolyte.

REFERENCE SIGNS LIST

10      Non-aqueous electrolyte secondary battery
11      Positive electrode
12      Negative electrode
13      Separator
14      Electrode assembly

| 15 | Battery case |
|---|---|
| 16 | Case body |
| 17 | Sealing assembly |
| 18, 19 | Insulating plate |
| 20 | Positive electrode lead |
| 21 | Negative electrode lead |
| 22 | Projecting portion |
| 23 | Filter |
| 24 | Lower vent member |
| 25 | Insulating member |
| 26 | Upper vent member |
| 27 | Cap |
| 28 | Gasket |
| 30 | Secondary particle |
| 32 | Primary particle |
| 34 | Void |

**Claims**

1. A positive electrode active material for non-aqueous electrolyte secondary batteries comprising a lithium-containing composite oxide containing secondary particles formed by aggregation of primary particles, wherein

   the lithium-containing composite oxide has, in cross-sectional observation of the secondary particles, 300 or more voids observed per visual field of 76.46 $\mu m^2$, and
   a median of nearest inter-void distances of the voids observed per visual field of 76.46 $\mu m^2$ is less than or equal to 170 nm.

2. The positive electrode active material for non-aqueous electrolyte secondary batteries according to claim 1, wherein, in the lithium-containing composite oxide, an average value of areas of the voids obtained by the cross-section observation of the secondary particles is less than or equal to 3000 $nm^2$.

3. The positive electrode active material for non-aqueous electrolyte secondary batteries according to claim 1 or 2, wherein, in the lithium-containing composite oxide, a void ratio obtained by the cross-section observation of the secondary particles is less than or equal to 2.0%.

4. The positive electrode active material for non-aqueous electrolyte secondary batteries according to claim 1 or 2, wherein the lithium-containing composite oxide contains at least one element selected from the group consisting of Al, Ba, Bi, Ca, Ce, Er, Eu, Hf, Mg, Nb, La, Sb, Sr, Ta, Ti, V, and Zr.

5. The positive electrode active material for non-aqueous electrolyte secondary batteries according to claim 1 or 2, wherein the lithium-containing composite oxide contains at least one element selected from the group consisting of Ni, Co, and Mn.

6. A non-aqueous electrolyte secondary battery comprising: a positive electrode containing the positive electrode active material for non-aqueous electrolyte secondary batteries according to claim 1 or 2; a negative electrode; and a non-aqueous electrolyte.

# Figure 1

# Figure 2

# Figure 3

EP 4 693 440 A1

## INTERNATIONAL SEARCH REPORT

| International application No. |
|---|
| **PCT/JP2024/012367** |

**A. CLASSIFICATION OF SUBJECT MATTER**

*H01M 4/131*(2010.01)i; *H01M 4/505*(2010.01)i; *H01M 4/525*(2010.01)i
FI: H01M4/131; H01M4/505; H01M4/525

According to International Patent Classification (IPC) or to both national classification and IPC

**B. FIELDS SEARCHED**

Minimum documentation searched (classification system followed by classification symbols)
H01M4/00-4/62; H01M10/05-10/0587; H01M10/36-10/39

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/169184 A1 (PANASONIC INTELLECTUAL PROPERTY MANAGEMENT CO., LTD.) 05 October 2017 (2017-10-05)<br>entire text, all drawings | 1-6 |
| A | WO 2022/130982 A1 (PANASONIC INTELLECTUAL PROPERTY MANAGEMENT CO., LTD.) 23 June 2022 (2022-06-23)<br>entire text, all drawings | 1-6 |
| A | WO 2014/024571 A1 (NISSAN MOTOR CO., LTD.) 13 February 2014 (2014-02-13)<br>entire text, all drawings | 1-6 |
| A | WO 2014/142279 A1 (NISSAN MOTOR CO., LTD.) 18 September 2014 (2014-09-18)<br>entire text, all drawings | 1-6 |
| A | WO 2017/018099 A1 (SUMITOMO METAL MINING CO., LTD.) 02 February 2017 (2017-02-02)<br>entire text, all drawings | 1-6 |

☑ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/012367**

### C. DOCUMENTS CONSIDERED TO BE RELEVANT

| Category* | Citation of document, with indication, where appropriate, of the relevant passages | Relevant to claim No. |
|---|---|---|
| A | WO 2018/020845 A1 (SUMITOMO METAL MINING CO., LTD.) 01 February 2018 (2018-02-01) entire text, all drawings | 1-6 |
| A | CN 110556520 A (SAMSUNG ELECTRONICS CO., LTD.) 10 December 2019 (2019-12-10) entire text, all drawings | 1-6 |

Form PCT/ISA/210 (second sheet) (July 2022)

## INTERNATIONAL SEARCH REPORT
### Information on patent family members

International application No.

**PCT/JP2024/012367**

| Patent document cited in search report | | | Publication date (day/month/year) | Patent family member(s) | | | Publication date (day/month/year) |
|---|---|---|---|---|---|---|---|
| WO | 2017/169184 | A1 | 05 October 2017 | US | 2019/0103605 | A1 | |
| | | | | entire text, all drawings | | | |
| | | | | CN | 108780889 | A | |
| WO | 2022/130982 | A1 | 23 June 2022 | US | 2024/0038970 | A1 | |
| | | | | entire text, all drawings | | | |
| | | | | EP | 4265570 | A1 | |
| | | | | CN | 116670075 | A | |
| WO | 2014/024571 | A1 | 13 February 2014 | (Family: none) | | | |
| WO | 2014/142279 | A1 | 18 September 2014 | US | 2016/0036041 | A1 | |
| | | | | entire text, all drawings | | | |
| | | | | EP | 2975680 | A1 | |
| | | | | CN | 105051952 | A | |
| | | | | KR | 10-2015-0122172 | A | |
| | | | | CN | 110518234 | A | |
| WO | 2017/018099 | A1 | 02 February 2017 | US | 2018/0226646 | A1 | |
| | | | | entire text, all drawings | | | |
| | | | | EP | 3331069 | A1 | |
| | | | | CN | 107851793 | A | |
| | | | | KR | 10-2018-0023993 | A | |
| WO | 2018/020845 | A1 | 01 February 2018 | US | 2019/0260024 | A1 | |
| | | | | entire text, all drawings | | | |
| | | | | US | 2022/0399544 | A1 | |
| | | | | KR | 10-2019-0035716 | A | |
| | | | | CN | 109803927 | A | |
| CN | 110556520 | A | 10 December 2019 | US | 2019/0372109 | A1 | |
| | | | | entire text, all drawings | | | |
| | | | | US | 2023/0307615 | A1 | |
| | | | | EP | 3578517 | A1 | |
| | | | | KR | 10-2019-0138196 | A | |

Form PCT/ISA/210 (patent family annex) (July 2022)

**EP 4 693 440 A1**

<br>

REFERENCES CITED IN THE DESCRIPTION

**Patent documents cited in the description**

- JP 2016169817 A